# EUROPEAN PATENT APPLICATION

(11) **EP 2 243 360 A1**
(43) Date of publication of application: **27.10.2010**
(21) Application number: 09712946.4
(22) Date of filing: 20.02.2009
(51) Int. Cl.: A01N 25/34, A01N 25/10, A01N 37/06, A01N 59/16, A01N 59/20, A01P 1/00, C08L 1/02, C08L 35/00, D01F 2/10, D01F 6/36, D06M 11/56, A62B 18/02

(54) **ANTIVIRAL SUBSTANCE, ANTIVIRAL FIBER, AND ANTIVIRAL FIBER STRUCTURE**

(30) Priority: 20.02.2008 JP 2008039333; 04.07.2008 JP 2008176178
(71) Applicant: Daiwabo Holdings Co., Ltd., Chuo-ku Osaka-shi, Osaka 541-0056 (JP)
(72) Inventor: MATSUSHITA, Miki, Kako-gun Hyogo 675-0163 (JP); OTSUKI, Koichi, Kyoto-shi Kyoto 603-8555 (JP); TAKAKUWA, Hiroki, Kyoto-shi Kyoto 603-8555 (JP); TSUNEKUNI, Ryota, Kyoto-shi Kyoto 603-8555 (JP)
(74) Representative: von Kreisler Selting Werner
(86) International application number: PCT/JP2009/053083
(87) International publication number: WO 2009/104760

(57) **Abstract**

The present invention is to provide an antiviral substance effective for inactivating viruses, a fiber product carrying the antiviral substance, and a fiber structure. The antiviral substance comprises a polymer containing a maleic acid component as a monomer unit in its polymer chain, and is effective against an avian influenza virus. An antiviral fiber can be produced by mixing the copolymer with cellulose and spinning the resulting mixture.

## Description

### Technical Field

The present invention relates to antiviral substance comprising a polymer that is effective against viruses and to fiber having an antiviral function.

### Background of the Invention

Recently, viral diseases such as SARS (Severe Acute Respiratory Syndrome) and avian influenza are rampant worldwide. As for influenza viruses, in particular, new types thereof have been found one after another, hence posing a threat to humans. Originally, the host range of a virus is limited so that a virus that infects mammals has only infected mammals and another virus that infects birds has only infected birds. However, the avian influenza viruses have a wide host range and can infect mammals as well as birds so that humans could be infected with this virus. Recently, H5N1 type influenza is rampant in Asia and Europe and accordingly it is feared that a new type of human influenza derived from the avian influenza could appear.

In addition, the avian influenza viruses are conveyed to remote areas by migratory birds so that it is difficult to prevent the viruses from entering into a country only by quarantine or suspension of, for example, food imports from a country where the avian influenza occurs.

An agent to inactivate influenza viruses is disclosed in Japanese Unexamined Patent Publication No. 2006-328039. This influenza virus inactivating agent is liquid comprising iodine and β-cyclodextrin.

Japanese Unexamined Patent Publication No.03-121145 discloses a cellulosic composition having an ion-exchange function, which comprises a mixture of cellulose and vinyl acetate-maleic acid copolymer to have an antibacterial effect against Staphylococcus and Gram-negative bacterium.

As fiber having a crosslinking structure and a carboxyl group in the molecule, International Publication WO2005/083171 discloses an antiviral fiber of a cross-linked acrylic fiber in which poorly water-soluble particles of a metal and/or a metal compound is dispersed. According to this antiviral fiber, the particles of the poorly water-soluble metal and/or the metal compound dispersed finely in the fiber contact with viruses to have an inactivating effect on the viruses. However, a sufficient inactivating effect cannot be achieved with this method. Also, it is presumed that this inactivating effect of this fiber can be only achieved under a moisture atmosphere.

### Summary of the Invention

The present inventors have long been studying property peculiar to a cellulosic composition disclosed in the Japanese Unexamined Patent Publication No. 03-121145 and have found that protein denaturation is induced by the cellulosic composition. Considering that it is difficult to completely eliminate emergence of influenza viruses, an object of the present invention is to provide an antiviral substance effective against viruses that are far smaller in size than that of bacteria such as Staphylococcus and Gram-negative bacterium by utilizing the properties of the cellulosic composition, and to provide fiber, fiber structures and fiber products all of which carry the antiviral substance.

An antiviral substance of the present invention developed to solve the above-mentioned problems comprises a polymer containing a maleic acid component as a monomer unit in a polymer chain thereof.

In the antiviral substance, the polymer is a copolymer selected from the group consisting of an olefine-maleic acid copolymer, a styrene-maleic acid copolymer, a vinyl ester-maleic acid copolymer, a vinyl acetate-maleic acid copolymer and a vinyl chloride-maleic acid copolymer.

In the antiviral substance, an ion of a metal selected from the group consisting of copper, silver, zinc and nickel is carried with the polymer.

In the antiviral substance, the polymer containing the maleic acid component is a vinyl acetate-maleic acid copolymer carrying a copper ion.

In the antiviral substance, the polymer is a blend of cellulose and at least one of the copolymer having the maleic acid component.

The antiviral substance is effective against an avian influenza virus.

The antiviral substance is effective against the avian influenza virus at least one selected from the group consisting of A/whistling swan/Shimane/499/83 (H5N3) strain and A/ Turkey/ Wisconsin/1/66 (H9N2) strain.

The antiviral substance is effective against a human influenza virus.

The antiviral substance is effective against a swine influenza virus.

The antiviral substance is effective against a norovirus.

An antiviral fiber of the present invention developed to solve the above-mentioned problems comprises an antiviral substance comprising a polymer containing a maleic acid component as a monomer unit in a polymer chain thereof.

An antiviral fiber structure of the present invention developed to solve the above-mentioned problems comprises at least partly the antiviral fiber.

Further, an antiviral fiber product of the present invention developed to solve the above-mentioned problems comprises at least partly the antiviral fiber and is formed into clothes, bedclothes, futon/Japanese style bedding, curtains, wallpapers, carpets, mats, sheets, filters, masks, wipers, towels, protective clothes, guard nets, culled chicken bags, poultry house supplies and medical sheets.

The antiviral substance of the present invention is effective in inactivating the viruses. In addition, the antiviral fiber which carries or is spun with the antiviral substance of the present invention is effective in inactivating the viruses. Further, the antiviral fiber of the present invention can be processed into fiber products and made into the fiber structure of the present invention. The fiber structure has the significant inactivating effect on the viruses when the viruses are contacted with this fiber structure.

### Detailed Explanation of the Invention

The antiviral substance of the present invention comprises a polymer containing a maleic acid component as a monomer unit in the polymer chain, and an olefine-maleic acid copolymer, a styrene-maleic acid copolymer, a vinylester-maleic acid copolymer, a vinyl acetate-maleic acid copolymer and a vinyl chloride-maleic acid copolymer can be exemplified.

The antiviral substance has an inactivating effect on various viruses, and the viruses inactivated by the present invention include all kinds of viruses regardless of genome type and existence or nonexistence of envelope. Examples of such viruses are herpesvirus, smallpox virus, cowpox virus, chickenpox virus, adenovirus etc. of viruses having DNA as genome; measles virus, influenza virus, coxsackievirus, calicivirus (norovirus genus), retrovirus (lentivirus genus, for example HIV (Human Immunodeficiency Virus)), coronavirus etc. of viruses having RNA as genome. Among these viruses, examples of viruses having envelope are herpesvirus, smallpox virus, cowpox virus, chickenpox virus, measles virus, influenza virus etc., and examples of viruses having no envelope are adenovirus, coxsackievirus, norovirus etc.

The reason why the antiviral substance has an inactivating effect on viruses is considered that the activity of the HA (hemagglutinin) and NA (neuraminidase) spikes on the surface of the virus is inhibited by the agents. It is also considered that the activity of the spikes on the surface of the virus is inhibited or virus particles are directly destroyed.

The antiviral substance has significant inactivating effect on avian influenza viruses. They are especially effective against highly-virulent, highly-pathogenic avian influenza viruses such as H5 and H7 subtype viruses. In the present invention, antiviral effects on the avian influenza viruses of A/whistling swan/shimane/499/83 (H5N3) strain and A/Turkey/Wisconsin/1/66 (H9N2) strain are confirmed. The antiviral agents are thought to be effective against other avian influenza virus such as H5N1 type.

The antiviral substance of the present invention has high inactivating effect on human influenza viruses as well as all sorts of influenza viruses. The antiviral substance is proved to have the antiviral effect on the human influenza virus of A/Aichi/2/68 (H3N2) strain and is also thought to be effective against other human influenza viruses.

The antiviral substance is proved to be effective against the swine influenza virus of A/Swine/lowa/15/30 (H1N1) strain.

The antiviral substance has significant inactivating effect on the norovirus. The antiviral substance of the present invention is proved to have the antiviral effect on calicivirus which is commonly used as an alternative virus of norovirus that cell thereof cannot be cultivated.

A typical example of the before-mentioned polymer containing the maleic acid component is vinyl acetate-maleic acid copolymer. This copolymer can be obtained by performing a solution polymerization of vinyl acetate and maleic anhydride under the presence of a radical polymerization initiator in an organic solvent such as benzene, toluene and acetic acid ester.

The vinyl acetate-maleic acid copolymer is preferably a copolymer consisting of approximately equivalent component of vinyl acetate and maleic acid. Although the molecular weight thereof may range widely depending on purpose, it is preferably ranging from 10,000 to 2,000,000, more preferably ranging from 100,000 to 500,000.

The vinyl acetate-maleic acid copolymer is prepared by using vinyl acetate and maleic anhydride under the molar rate ranging from 0.9:1.1 to 1.1:0.9. Polymerization reaction temperature is usually between 50 to 120°C, and polymerization reaction time is between 1 to 6 hours. As the radical polymerization initiator, a peroxide-type polymerization initiator such as benzoyl peroxide and acetyl peroxide, and an azo-type polymerization initiator such as azobis(isobutyronitrile) can be exemplified. The amount of the polymerization initiator is usually between from 0.05 to 1.0% by mass towards the total mass of all monomers. After removing the solvent from the resulted copolymer solution, a solid copolymer can be obtained as the antiviral substance.

The polymer containing the maleic acid component can carry or be blended with an organic or inorganic carrier. The content of the polymer containing the maleic acid component with respect to that of the carrier is not particularly limited as long as it can be carried or blended, and antiviral effect is not impaired. For example, it is preferable that 1 to 100 parts by mass of the polymer containing the maleic acid with respect to 100 parts by mass of the carrier be used, more preferably 5 to 60 parts by mass.

It is preferable that the antiviral substance of the present invention carries cellulosic material as the organic carrier. The cellulosic material has an excellent water-absorbing property, so antiviral effect tends to be increased. Especially when the antiviral substance carries an ion of a metal such as copper, silver and zinc, it is important that the metal ion as a positive ion is carried with the carrier by interaction with a negative ion. The cellulosic material having a property of keeping moisture is preferable. The cellulosic material can be made into fiber, sponge etc.

As the organic carrier, fiber is preferably used. The fiber is basically bulky and has a large surface area so that the polymer containing the maleic acid component can be effectively contacted with the viruses in the air.

As fiber materials, all sorts of natural fiber, regenerated fiber, semisynthetic fiber and synthetic fiber such as cellulosic fiber (cotton, hemp, rayon, pulp etc.), protein fiber, (wool, silk etc.), polyamide fiber, polyester fiber, polyacrylic fiber, polyvinyl alcohol fiber, polyvinyl chloride fiber, polyvinylidene chloride fiber, polyolefin fiber, polyurethane fiber, etc. can be used. Among them, the cellulosic fiber is preferably used because the cellulosic fiber has excellent properties mentioned above. Further, the cellulosic fiber does not collect dust by electrostatic occurrence like synthetic fiber. Therefore, as for the cellulosic fiber, a reaction site cannot be blocked by dust, being able to fully exert the antiviral action. The rayon, in particular, has an excellent water-absorbing property and is easy to adjust its fineness and length so that rayon fiber can be used for various fiber structures and fiber products.

A solution of the vinyl acetate-maleic acid copolymer is mixed with and solved into a metal-containing alkaline solution such as a viscose solution or a cuprammonium solution of the cellulose. Both solutions can be prepared by publicly known techniques. Then the resulting liquid mixture is extruded into a spinning solution through a spinning nozzle to obtain the antiviral fiber by the so-called wet spinning method (for example, Japanese Unexamined Patent Publication No. 08-13905).

A blend ratio of which mass of the cellulose is 60-99% by mass and mass of the copolymer is 40-1% by mass is preferable. When the ratio of cellulose is less than 60% by mass, the surface of the resulting cellulosic composition may become sticky to likely cause disadvantages such as blocking phenomena during subsequent steps such as spinning, weaving and composite-material preparing processes. On the other hand when the ratio of the cellulose exceeds 99% by mass, the antiviral effect induced by the vinyl acetate-maleic acid copolymer may be lowered.

In order to further improve the antiviral function, the antiviral fiber of the present invention preferably carries at least one kind of a metal ion selected from the group consisting of copper ion, silver ion, zinc ion and nickel ion, by dipping or coating with a solution containing an ion of metal selected from the group consisting of copper, silver, zinc and nickel. As the metal ion, the copper ion is preferable due to its excellent antiviral effect.

The antiviral fiber carrying the copper can be prepared by immersing it into a solution containing, for example, copper sulfate (CuSO₄) or copper nitrate (Cu(NO₃)₂) to make the fiber absorb the copper ion. The antiviral fiber carrying the zinc ion can be prepared by immersing the fiber into zinc chloride (ZnCl₂) solution.

The antiviral fiber can be used for example by adding the fiber into sheet-like articles, molded resin articles, molded inorganic articles etc. In addition, the fiber can be laminated to, for example, sheet-like articles, molded resin articles, molded inorganic articles using binders, etc.

The antiviral fiber can be used in any cross-sectional shape such as a circular-shape, irregular-shape, or hollow-shape which, however, is not limitative. And their fiber length is not specifically limited, that is, any fiber such as long, short or fine fiber can be used. The long fiber can be obtained by winding it on a bobbin as it is after the fiber is spun. On the other hand, the short fiber can be obtained by cutting fiber into a predetermined length using a cutter. When the fiber is the natural fiber, the fiber can be used as it is. The fine fiber can be obtained by grinding the fiber using a grind mill and then the ground fiber is classified using a screen having an appropriate mesh size. The ground and cut fine fiber has a moderate curvature. In addition, the fineness of the antiviral fiber is not specifically limited, and the fiber having any fineness range can be used in accordance with an intended use.

The antiviral fiber structure of the present invention contains at least partly the antiviral fiber therein and can be used by forming it into yarn, woven/knitted fabric, webs, nonwoven, paper, nets, etc. In addition, the fiber structure may be laminated with another sheet such as a film etc. to form a laminated sheet.

Hereunder, an embodiment of the antiviral fiber structure is explained in detail. When the antiviral fiber structure of the present invention is made of yarn, it can be prepared by one of the following methods (1) to (3), for example.
(1) A method comprises a step of preparing fiber which carries or is spun with the polymer containing the maleic acid component as the antiviral substance or the polymer containing the maleic acid component carrying an ion of metal such as copper, silver and zinc to obtain an antiviral fiber, and a subsequent step of preparing yarn at least partly including the antiviral fiber.
(2) A method comprises a step of preparing fiber which carries or is spun with the polymer containing the maleic acid component as an antiviral substance and then obtaining yarn at least partly including the antiviral fiber, and a subsequent step of preparing the fiber containing the maleic acid component carrying an ion of metal such as copper, silver and zinc.
(3) A method comprises a step of preparing yarn as fiber by a known procedure, and a subsequent step of preparing a fiber having the surface carrying the polymer containing the maleic acid component.

The above-mentioned yarn is prepared by a known procedure for manufacturing spun yarn or multifilament yarn.

When the antiviral fiber structure of the present invention is made of a woven/knitted fabric, it can be prepared by one of the following methods, for example.
(1) A method comprises a step of preparing fiber which carries or is spun with the polymer containing the maleic acid component as the antiviral substance or the polymer containing the maleic acid component carrying an ion of metal such as copper, silver and zinc as an antiviral fiber structure and then obtaining yarn at least partly including the antiviral fiber, if necessary dyed, and a subsequent step of preparing a woven/knitted fabric by weaving the yarn.
(2) A method comprises a step of preparing fiber which carries or is spun with the polymer containing the maleic acid component as an antiviral substance to be an antiviral fiber and then obtaining yarn at least partly including the antiviral fiber, if necessary dyed, and a subsequent step of preparing the fiber containing the maleic acid component carrying an ion of metal such as copper, silver and zinc.
(3) A method comprises a step of preparing an antiviral fiber cut to be a length of 5mm or less or ground fine antiviral fiber, and a subsequent step of preparing the short fiber or the crushed fiber carrying the surface of fibers of the woven/knitted fabric by using a binder.

The above-mentioned woven/knitted fabric is prepared by a known procedure for the woven/knitted fabric.

When the antiviral fiber structure is made of webs, nonwoven, paper or nets, it can be prepared by methods in a similar manner to the above-mentioned methods for preparing the woven/knitted fabric.

The antiviral fiber is included at least partly within, for example, fiber products such as clothes (including hats, gloves and handkerchiefs), futon/Japanese style bedding, curtains, wallpapers, carpets, mats, sheets, filters, masks, wipers, towels, protective clothes, guard nets, culled chicken bags, poultry house supplies. These fiber products are offered for our daily lives and are used to inactivate the viruses that are scattering and floating in our living spaces.

The antiviral fiber structure and antiviral fiber product of the present invention will be explained precisely. In a case where the antiviral fiber structure of the present invention is made from the nonwoven, the fiber webs thereof can be formed, for example, by a process of carding, airlaiding, wet-paper forming, spunbonding, meltblowning, flash spinning, or electrospinning. The resulting fiber webs are processed into an airthrough nonwoven, a thermobonded nonwoven such as a thermally pressure-bonded nonwoven, a chemical bonded nonwoven, a needlepunched nonwoven, a hydroentangled nonwoven, a spunbonded nonwoven, a meltblown nonwoven, etc.

In a case where the antiviral fiber previously carries or blended with the antiviral substance is used, the fiber web thereof may be formed from 100% by mass of the antiviral fiber, but can be formed from a mixture of the antiviral fiber of the present invention and another antiviral fiber or can be mixed with another fiber, as long as the antiviral effect is exerted. When the antiviral fiber is mixed with another fiber, the amount of the antiviral fiber is preferably included in an amount of at least 20% by mass, more preferably at least 30% by mass, still more preferably 50% by mass or more. The thus obtained fiber webs can be subjected to a predetermined process of being formed into the nonwoven. Also, the obtained fiber webs or the nonwoven may carry the metal ion by the before-mentioned method.

For example, in a case where fiber as a carrier (hereinafter it is also called "fiber as carrier"), a fiber web and raw nonwoven are prepared thereby obtaining a nonwoven carrying the antiviral substance, the fiber web may consist of 100% by mass of the fiber as carrier. However, the fiber as carrier may be mixed with another antiviral fiber or another fiber within a range where antiviral effect is exerted. When mixed with another fiber, at least 20% by mass of the fiber as carrier is preferably used, more preferably at least 30% by mass, still more preferably 50% by mass or more. The metal ion can be carreid with the obtained fiber webs or nonwoven by the before-mentioned method. Like this, in a case where the fiber web or nonwoven is prepared to carry the antiviral substance in a post processing step, unification of the nonwoven with another sheet through lamination preferably improves the physical strength and processability of the nonwoven, and accordingly production rate can be improved. As an examples of the another sheet, a spunbonded nonwoven, meltblown nonwoven, drawn uniaxially arranged nonwoven whose filaments are all arranged in one direction, cross-laminated nonwoven whose filaments are laminated in such a manner that directions of the filaments are disposed perpendicular to each other, paper prepared by a paper-making technique, nets, film, woven/knitted fabric, can be exemplified. As a preferred reinforcing layer, the spunbond nonwoven, the drawn uniaxially arranged nonwoven and the cross-laminated nonwoven are specifically exemplified because they give physical strength to the laminated nonwoven.

The antiviral fiber structure of the present invention may include another antiviral fiber. For example, as another fiber carrying a substance having an antiviral effect, a fiber containing metal phthalocyanine derivative represented by the following formula (I) as an effective component (hereinafter it is also called "antiviral fiber P") can be exemplified.

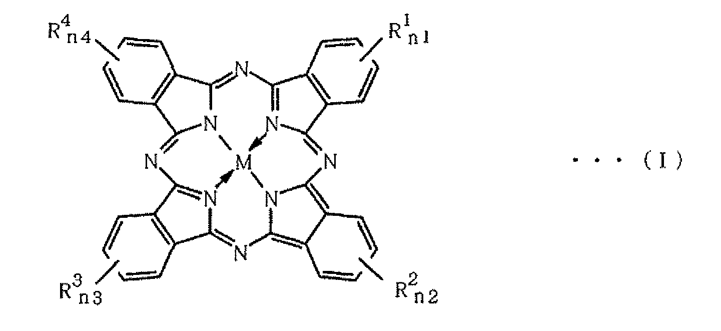

In the formula (I), M is a metal selected from the group consisting of Fe, Co, Mn, Ti, V, Ni, Cu, Zn, Mo, W and Os; R¹, R², R³ and R⁴ are the same or different and are each -COOH or -SO₃H group; and n1, n2, n3, and n4 are each 0 to 4 under a condition of 1≤ n +n2+n3+n4≤ 8 where the sum is a positive number. The fiber P is preferably containing the metal phthalocyanine derivative represented by the above formula (1) wherein M is Fe; R¹, R², R³ and R⁴ are the same or different and each -COOH group; and n1, n2, n3, and n4 are each 0 to 4 under a condition of 1≤ n 1 +n2+n3+n4≤ 4 where the sum is a positive number. As the fiber having a similar effect, the fiber P may also contains the metal phthalocyanine derivative represented by the above formula (1) wherein M is Co; R¹, R², R³ and R⁴ are the same or different and each -SO₃H group; and n1, n2, n3, and n4 are each 0 to 1 under a condition of 1≤ n1+n2+n3+n4≤ 2 where the sum is a positive number. The metal phthalocyanine derivatives are metal phthalocyanine compounds having structure mentioned above and their salts. As the salts of the metal phthalocyanine compounds, salts of inorganic bases or organic bases etc. can be exemplified. As preferable examples of the salts of inorganic bases, alkali metal salts such as sodium salts, potassium salts, etc.; alkaline earth metal salts such as calcium salts, magnesium salts, etc.; and copper (II) salts; and ammonium salts can be exemplified. As preferable examples of the salts of organic bases, salts of trimethylamine, triethylamine, pyridine, picoline, ethanolamine, diethanolamine, triethanolamine, dicyclohexylamine, etc., can be exemplified.

The antiviral fiber P may carry the phthalocyanine derivative of which exocyclic position of a phthalocyanine ring has no functional group meaning all of R¹, R², R³ and R⁴ in the above formula (I) is H.

As a method of making the metal phthalocyanine derivative carries the fiber as carrier to prepare another antiviral fiber P, methods such as dipping the fiber as carrier into a solution comprising the metal phthalocyanine derivative; dyeing such as direct dyeing or ionic dyeing; printing, spraying or coating a solution comprising the metal phthalocyanine derivative having a binder component onto the fiber or the fiber structure by using a coater; can be adopted. The ionic dyeing has a procedure in which cationic groups are bonded to fiber such as cotton, rayon etc. and then the cationic groups are ionically connected to anionic groups such as the carboxyl group or the sulfone group of thus dyestuff.

In a case where the antiviral fiber is used together with the above mentioned another antiviral fiber P, the antiviral fiber structure of the present invention can be prepared by a step of previously blending the antiviral fiber of the present invention with the another antiviral fiber P; a step of which the antiviral fiber of the present invention is blended with the fiber as carrier, or it is contacted with a phthalocyanine derivative solution to obtain the antiviral fiber P; or in addition to these steps, a step of which the antiviral fiber of the present invention is contacted with a metal ion solution to carry the metal ion on the antiviral fiber of the present invention; or a step of which respective fibers as carrier are firstly prepared and then the maleic acid component-containing polymer and the phthalocyanine derivative are applied respectively.

As an example of the antiviral fiber structure, the thermally-bond nonwoven will be shown. The thermally-bond nonwoven can be manufactured by firstly forming a fiber web by blending the antiviral fiber of the present invention, a thermal adhesive fiber and if necessary another antiviral fiber and/or another fiber; then the thermal adhesive fiber is thermally adhered by heat to obtain the thermobonded nonwoven. As the thermally adhesive fiber, a single component fiber or a composite fiber made from polymers or copolymers comprising, for example, polyester such as polyethylene terephthalate, polybutylene terephthalate, polytrimethylene terephthalate, polylactic acid etc.; polyamide such as nylon 6, nylon 66 etc.; and polyolefin such as polypropylene, polyethylene, polybutene etc., are exemplified. Such polymers or copolymers are at least partly exposed to air at the surface of the fiber.

A chemical bonded nonwoven will be shown below as an example of the antiviral fiber structure. Firstly, a fiber web is formed by mixing the antiviral fiber of the present invention and, if necessary, another antiviral fiber and/or another fiber; then if necessary the fiber web is formed into nonwoven (such as, needlepunched nonwoven); and then a binder is applied by immersing, spraying (for example spray bonding), coating (for example, foam bonding) etc. and then drying and/or curing step is carried out, thereby obtaining the chemical bonded nonwoven. As the binder, an acrylic binder, an urethane binder etc. can be used. The coating weight of the binder is not specifically limited as long as the nonwoven maintains its configuration, and the binder does not impair the antiviral effect. For example, a preferred solid content of the binder with respect to the mass of the nonwoven is in the range of 5-50% by mass.

As still another example of the antiviral fiber structure, the hydro-entangled nonwoven will be shown below. Firstly a fiber web is formed by mixing the antiviral fiber of the present invention and if necessary another antiviral fiber and/or another fiber. To the fiber web, another sheet can be laminated, if necessary. As the another sheet, for example, a spunbonded nonwoven, a meltbrown nonwoven, a drawn uniaxially arranged nonwoven, a cross-laminated nonwoven, paper prepared by a wet paper-making technique, nets, films and a woven/knitted fabric can be exemplified. The spun-bond nonwoven, the drawn uniaxially-arranged nonwoven and the cross-laminated nonwoven are specifically preferable as a reinforcing layer because they give physical strength to the laminated nonwoven. Crossing between the fibers can be formed, for example, by jetting a water stream with a water pressure of 1MPa-10MPa on both front and back surfaces of the fiber web or the laminated sheet one to four times using a nozzle with orifices having pore diameter of 0.05-0.5mm that are arranged at an interval of 0.5mm-1.5mm distance from each other.

In the antiviral fiber structure of the present invention, when a waterproof property is needed, a waterproof antiviral fiber structure can be manufactured by laminating a waterproof film or resin to the surface of the antiviral fiber structure using, for example, an extrusion laminator. Further, when a moisture permeable waterproof property is needed, another antiviral fiber structure having the moisture permeable waterproof property can be obtained by laminating an ultra fine fiber nonwoven such as the meltbrown nonwoven or by laminating a moisture permeable resin.

The antiviral fiber structures having a waterproof or moisture permeable waterproof property can be used for medical fabrics such as bed sheets, curtains at hospitals, surgical sheets, experimental sheets, etc.

The thermobonded nonwoven, the chemical bonded nonwoven, the hydro-entangled nonwoven mentioned above can be used as an air filter. When used as the air filter for medium sized dust, preferred fineness of the fiber is in the range of 2-50dtex. Preferred mass per unit area is in the range of 10-150g/m². These air filters obtained above can be used as home appliance filters such as for air conditioners, air purification systems, vacuum cleaners. For example, when used as the filter for the air purification system, the filter has a laminated structure comprising a carrier member such as a chemical bonded nonwovn fabric, etc., the antiviral fiber structure, a high performance filter layer such as an electret nonwoven, a High Efficiency Particulate Air filter (HEPA) or Ultra Low-Penetration Air (ULPA) etc. These are used as pleats-shaped sheets.

The antiviral fiber structure of the present invention can also be used as masks such as sanitary masks, surgical masks, dust masks (for example, corresponding to respiratory protective device (Particulate Respirator Type N95)). As the antiviral fiber structure that can be used for the masks may be made of the aforementioned thermobonded nonwoven and the hydro-entangled nonwoven. The antiviral fiber used for the mask preferably has fineness of 1-10dex, more preferably 2-8dtex. Preferred mass per unit area is in the range of 30-60g/m². When the mask has a laminated structure comprising, for example, from outside to mouth side, a reinforcing nonwoven (for example, a spunbonded nonwoven, a thermobonded nonwoven)/ the antiviral nonwoven of the present invention/ an ultra fine fiber nonwoven (for example a meltbrown nonwoven)/ a reinforced or flexible nonwoven (for example, a spunbonded nonwoven of a thermobonded nonwoven), the antiviral performance can be effectively exerted.

As another example of the antiviral fiber structure of the present invention, a nonwoven made of another fiber, on the surface of which a severed short fiber or a ground fine fiber (hereinafter it is also called as a "fiber powder" generally) made by cutting the antiviral fiber into a fiber having a length less than 5mm, can be exemplified. Another fiber can carry the above-mentioned fiber powder made from the antiviral fiber by using binder on the surface thereof. A method to support the antiviral fiber powder using a binder can be carried out by, for example, preparing a binder solution by adding a predetermined amount of the antiviral fiber powder to a binder (for example, an acrylic binder, an urethane binder), then applying the binder solution to a fiber substrate by dipping, spraying (for example spray bonding), coating (for example, using a knife coater or gravure coater), and then drying and/or curing, thus an antiviral fiber powder-carried nonwoven is obtained. As another process, at first, an aqueous dispersion of the antiviral fiber powder is prepared then the aqueous dispersion is applied by dipping, spraying, coating, etc. on a fiber structure containing a heat adhesive fiber or heat and humidity adhesive fiber and then the resulting fiber structure is heated to adhere the powder to the heat adhesive fiber or the heat and humidity adhesive fiber to obtain the antiviral fiber powder-carried nonwoven.

As the fiber substrate, for example, a nonwoven such as a thermobonded nonwoven, a spunbonded nonwoven, a hydro-entangled nonwoven and a woven/ knitted fabric or textile can be used.

The antiviral fiber powder-carried nonwoven can be used as, for example, protective clothes. At first this nonwoven is cut into a predetermined shape and then the cut nonwoven s are overlapped with each other at the end portions thereof and then they are sealed with heat, ultrasonic wave or high frequency wave or by sewing.

An embodiment of the antiviral fiber structure of the present invention comprising the woven/knitted fabric is explained in detail. Firstly, antiviral fiber which carries or is spun with the polymer containing the maleic component as the antiviral substance is prepared, and then yarn at least partly including the antiviral fiber. The obtained woven/knitted fabric is dipped in a solution containing a metal-ionic compound of 0.05 to 5%owf which means 0.05 to 5 parts by mass thereof toward 100 parts by mass of the fiber (for example copper sulfate aqueous solution) by using a dyeing machine such as a jigger dyeing machine, a high pressure solution-jet dyeing machine and a paddle dyeing machine. The dipped woven/knitted fabric is washed with water and dried to obtain an antiviral woven/knitted fabric containing the maleic acid component carrying an ion of a metal such as copper, silver and zinc. If necessary, an additional procedure of dipping acryl resin or urethane resin for fitting can be performed.

The antiviral woven/knitted fabric can be used, for example, for clothes, futon/Japanese-style bedding, curtains, carpets, mats, sheets, towels, protective clothing, guard nets, culled chicken bags, poultry house supplies, medical sheet materials and so on.

Hereunder, the embodiments of the present invention are explained in detail, but the scope of the present invention is not to be limited to these embodiments.

### -- Manufacture of antiviral fibers -

### (Example 1)

Into a viscose solution of cellulose (cellulose concentration is 9%), water-soluble salts of vinyl acetate-maleic anhydride copolymer was added and solved so that the content of the copolymer became 20 parts by mass for 100 parts by mass of cellulose as a solid content. The mixed solutions were extruded using a nozzle made of platinum into a strongly acidic spinning bath comprising 130g/l of sulfuric acid, 10g/l zinc sulfate and 250g/l of sodium sulfate. After conventional desulfurizing, refining and bleaching processes, a test sample of viscose rayon fiber containing vinyl acetate-maleic acid anhydride copolymer of the present invention was obtained. Its fineness was 3.3dtex, and fiber length was 51mm.

### (Example 2)

The fiber obtained in Example 1 was immersed into 4% copper sulfate aqueous solution for 10min., washed with distilled water and then dried for 3 hours at 70°C. Thus a test sample of the antiviral fiber was obtained. The antiviral fiber had copper content of 1% by mass as a sample.

### (Performance assessment of antiviral fibers against avian influenza viruses)

As a test virus, the avian influenza virus A/whistling swan/shimane/499/83 (H5N3) strain stored at the Research Center of Avian Influenza Virus of Tottori University was used. This avian influenza virus is also called as the avian influenza virus A/Kohakucho/Shimane/499/83 (H5N3) (hereinafter it is also called "H5N3 strain").

As other test viruses, the avian influenza virus A/ Turkey/ Wisconsin/1/66 (H9N2)) strain (hereinafter it is called "H9N2 strain") and swine influenza virus A/Swine/lowa/15/30 (H1N1) strain (hereinafter it is also called "H1N1 strain") were used.

Each antiviral fiber obtained in the above-mentioned Examples was cut into about 1.5cm length, and 0.2g of each was put into a polyethylene bag. Into the respective polyethylene bags, 0.6ml virus solution A, which was obtained by diluting the test virus 100 times with Phosphate Buffer Saline (PBS), was added to infiltrate the virus solution into the antiviral fiber. After letting the bags stood still for 10 min. (or 1min.) at 4°C, then the virus solution was sampled and diluted 10 times with PBS using a serial dilution method, and 0.2 ml of it was each inoculated into a chorio allantois cavity of 10-day-old embryonated chicken egg (specific pathogen free: SPF). After two-day cultivation, allantoic fluid B was collected and then determined whether there was virus growth or not using chicken hemagglutination reaction. Virus titer was calculated using the method of Reed & Muench (1938).

In Comparative Example, untreated rayon was used.

Virus titers of respective test samples of antiviral fibers are shown in Table 1.

**Table 1**

| Antiviral Fiber | Virus Strain | Amount of Fiber | Reaction Time | Viral Titer (EID₅₀/0.2ml) | | Virus Reduction (%) |
|---|---|---|---|---|---|---|
| | | | | A Solution | B Fluid | |
| Ex. 1 | H5N3 Strain | 0.2 g | 10 min. | 10^{7.25} | 10^{3.50} | 99.98 |
| Ex. 2 | H5N3 Strain | 0.2 g | 1 min. | 10^{7.50} | 10 ^{4.75} | 99.82 |
| Ex. 2 | H5N3 Strain | 0.2 g | 10 min. | 10 ^{7.50} | <10^{0.50} | >99.999 |
| Comp. | N5N3 Strain | 0.2 g | 10 min. | 10^{6.75} | >10^{5.50} | --- |
| Ex. 2 | H9N2 Strain | 0.2 g | 10 min. | 10^{6.25} | <10^{0.50} | >99.999 |
| Ex. 2 | H1N1 Strain | 0.2 g | 10 min. | 10^{6.50} | <10^{0.50} | >99.999 |

As shown in Table 1, viral titer of the allantoic fluid B in which each antiviral fiber was used as shown in Examples 1 and 2 considerably decreased when compared with virus solution A. The virus reduction rate showed 99% or more. This means that each antiviral fiber of Examples 1 and 2 has antiviral effect against the avian influenza virus. Especially the virus reduction rate of the rayon fiber comprising the vinyl acetate-maleic acid copolymer carrying the copper ion of Example 2 showed 99.999% or more. On the other hand, in the case of the allantoic fluid B of Comparative Example in which the antiviral fiber was not used, virus titer decreased when compared with that of the virus solution A but the virus reduction was insufficient.

100% by mass of antiviral fiber of Example 2 was mixed and then a fiber web was formed using a parallel carding machine and then the fiber web was subjected to a hydro-entangling treatment to obtain an antiviral nonwoven having a mass per unit area of 40g/m².

The obtained antiviral nonwoven was laid on the upper surface of a polypropylene spunbonded nonwoven, and further polypropylene meltbrown nonwoven and polypropylene spunbonded nonwoven were laminated in this order, and then cut into a square of 15cm by 15cm in side length and made it into pleats of three folds. Then the laminated nonwoven was provided with a string at central portions of both lateral end portions thereof, which was used to hook the mask to the ears. Then four end portions of the laminated sheet ends were heat-sealed to obtain an antiviral mask.

The obtained mask was used for seven days, then the antiviral nonwoven was taken out of the mask and virus titer was measured. Virus titer of the allantoic fluid B (<10^{1.5} (EID₅₀/0.2ml)) considerably decreased when compared with that of the virus solution A (10^{6.5} (EID₅₀/0.2ml)). The virus reduction rate was 99.999%. It was confirmed that the mask of the present invention had a long service life.

### (Example 3)

A test sample of a viscose rayon fiber containing vinyl acetate-maleic anhydride copolymer of the present invention having fineness of 1.7dtex and a fiber length of 38mm obtained in a similar manner to Example 1; and core-sheath type composite fiber, which is available from Daiwabo polytec Co. LTD. and is NBF(H) :trade name, having fineness of 2.2dtex and a fiber length of 51 mm in which core component was made of polypropylene and sheath component was made of high-density polyethylene; were used. These fibers were mixed in a mass ratio of 60% by mass of the test sample of the present invention to 40% by mass of core-sheath type composite fiber, and then the mixture was spread using a parallel carding machine to obtain a card web. The mass per unit area of the obtained card web was 40g/m².

Fiber on a surface of the obtained card web was jetted twice with columnar water flow having a water pressure of 4MPa using nozzles with a diameter of 0.08mm and orifices arranged at a spaced interval of 0.6mm from each other and then fiber on the other surface of the card web was also jetted twice with columnar water flow having the same water pressure of 4MPa to cause fiber to be entangled, and then dehydrated using a box type vacuum aspirator. Then the sheath portion of the core sheath type composite fibers was fusion bonded in a drum-type drier at 140 °C of controlled temperature and dried to provide a hydroentangled nonwoven which was made into one body by hydro-entanglement.

The obtained nonwoven was dipped in 0.1% of copper sulfate aqueous solution at 25°C, squeezed by nip rolls, then washed with water in a washing bath, and then dried at 80°C, thereby obtaining a test sample of an antiviral nonwoven. The antiviral nonwoven had copper content of 1 % by mass as a sample.

### (Example 4)

A laminated nonwoven having the first fiber layer, the second fiber layer and the third fiber layer was manufactured as follows. For the first fiber layer and the third fiber layer, a test sample of a viscose rayon fiber containing vinyl acetate-maleic anhydride copolymer of the present invention having fineness of 1.7dtex and a fiber length of 38mm obtained in Example 1 and then by spinning the blended solution; and core-sheath type composite fiber, which is available from Daiwabo polytec Co. LTD. and is NBF(H) :trade name, having fineness of 2.2dtex and a fiber length of 51 mm in which core component was made of polypropylene and sheath component was made of high-density polyethylene; were used. These fibers were mixed in a mass ratio of 60% by mass of the test sample of the present invention to 40% by mass of core-sheath type composite fiber, and then the mixture was spread using a parallel carding machine to obtain a card web. The mass per unit area of the obtained card web was 20 g/m².

As the second fiber layer, the drawn uniaxially arranged nonwoven consisting of polyester fiber having 5g/m² of mass per unit area, which is available from Nisseki Plasto CO., LTD. and is milife: registered trade name, was used.

The third fiber layer, the second fiber layer and the first fiber layer were laminated in this order to obtain a laminated web. Next, the first fiber layer of the card web was jetted twice with columnar water flow having a water pressure of 4MPa using nozzles with a diameter of 0.08mm and orifices arranged at a spaced interval of 0.6mm from each other and then the third fiber layer of the card web was also jetted twice with columnar water flow having the same water pressure of 4MPa to cause fiber to be entangled, and then dehydrated using a box type vacuum aspirator. Then the sheath portion of the core sheath type composite fibers was fusion bonded in a drum-type drier at 140°C of controlled temperature and dried to provide a laminated nonwoven which was made into one body by hydro-entanglement.

The obtained laminated nonwoven was dipped in 0.1% of copper sulfate aqueous solution at 25°C, squeezed by nip rolls, then washed with water in a washing bath, and then dried at 80°C, thereby obtaining a test sample of an antiviral nonwoven. The antiviral nonwoven had copper content of 0.7% by mass as a sample.

Virus titers of test samples of Examples 3 and 4 of the avian influenza virus are shown in Table 2. The test sample of the nonwoven was cut into a square of 1.5cm by 1.5cm in side length and used as a measurement sample.

**Table 2**

| Antiviral Fiber | Virus Strain | Amount of Fiber | Reaction Time | Viral titer (EID₅₀/0.2ml) | | Virus Reduction (%) |
|---|---|---|---|---|---|---|
| | | | | A Solution | B Fluid | |
| Ex. 3 | H5N3 Strain | 0.2 g | 10 min. | 10^{6.5} | <10^{0.5} | >99.999 |
| Ex. 4 | H5N3 Strain | 0.2 g | 10 min. | 10^{6.5} | <10^{0.5} | >99.999 |

As shown in Table 2, virus titer of the allantoic fluid B, in which each antiviral fiber of Examples 3 and 4 was used, considerably decreased when compared with that of the virus solution A. Each virus reduction rate was more than 99%. This means that each antiviral fiber and antiviral nonwoven of Examples 3 and 4 has antiviral effect on the human influenza virus.

### (Performance assessment of antiviral fiber against human influenza viruses)

As a test virus, human influenza virus A/Aichi/2/68(H3N2) strain (hereinafter it is called "(H3N2) strain") was used. In a case of nonwoven, 0.2g of test sample was taken out and cut into a square of 1.5cm by 1.5cm in side length; or in a case of fiber, 0.2g of raw stock comprising about 1.5cm length fiber; was prepared. Each sample was put into a polyethylene bag. Into the respective polyethylene bags, 0.6ml of virus solution A, which was obtained by diluting the test virus 100 times with Phosphate Buffer Saline (PBS), was added to infiltrate the virus solution into the antiviral fibers. After letting the bags stand still for 10min. (or 1min.) at 4°C, then the virus solution was sampled and then diluted 10 times with PBS and 0.2ml of it was each inoculated into the chorio allantois cavity of 10-day-old embryonated chicken egg (SPF). After two days cultivation, allantoic fluid B was collected and then determined whether there was virus growth or not using chicken hemagglutination reaction. Virus titer was calculated using the method of Reed & Muench (1938).

Virus titers of human influenza virus of Examples 2-4 are shown in Table 3.

**Table 3**

| Antiviral Fiber | Virus Strain | Amount of Fiber | Reaction Time | Viral titer (EID₅₀/0.2ml) | | Virus Reduction (%) |
|---|---|---|---|---|---|---|
| | | | | A Solution | B Fluid | |
| Ex. 2 | H3N2 Strain | 0.2 g | 10 min. | 10^{6.25} | <10^{0.75} | >99.999 |
| Ex. 3 | H3N2 Strain | 0.2 g | 10 min. | 10^{6.25} | <10^{0.5} | >99.999 |
| Ex. 4 | H3N2 Strain | 0.2 g | 10 min. | 10^{6.25} | <10^{0.5} | >99.999 |

As shown in Table 3, virus titer of the allantoic fluid B, in which each antiviral fiber of Examples 2 to 4 was used, considerably decreased when compared with that of the virus solution A. Each virus reduction rate was more than 99%. This means that each antiviral fiber and antiviral nonwoven of Examples 2 to 4 has antiviral effect on the human influenza virus.

The laminated nonwoven of Example 4 had more excellent post-processing compared to that of the nonwoven of Example 3.

### (Performance evaluation of antiviral nonwoven against norovirus)

As a test virus, Feline calicivirus F-9 ATCC VR-782 (hereinafter it is also called "Feline calicivirus") was used as an alternative virus of the norovirus. The performance of the antiviral nonwoven against the norovirus was evaluated as follows.

### 1. Method for evaluation

### (1) Used cells

CRFK cells available from Dainippon Pharmaceutical Co. Ltd. were used.

### (2) Used culture

### i. Culture for cellular proliferation

Eagle MEM culture: "Nissui" i, which is available from Nissui Pharmaceutical Co. Ltd., with 10% of fetal bovine serum was used.

### ii. Culture for cellular maintenance

Eagle MEM culture: "Nisssui" i with 2% of fetal bovine serum was used.

### (3) Preparation of viral suspension

### i. Incubation of cells

The cells were incubated as a monolayer in a flask for tissue incubation using the culture for cellular proliferation.

### ii. Seeding of virus

After the incubation of the monolayer, the culture for the cellular proliferation was removed from the flask, and then the test virus was seeded thereon. The culture for cellular maintenance was added thereto, and then it was incubated in an incubator containing 5% of concentration of carbon dioxide gas at 37°C within 1 °C for 1 to 5 days.

### iii. Preparation of viral suspension

After the incubation, the cell morphology was observed by using an inverted phase-contrast microscope, and the morphological change of the cells (cytopathic effect) was observed. Then the culture was centrifuged under 3000 rpm for 10 min, and the obtained supernatant was diluted with purified water 10 times to prepare a viral suspension.

### (4) Preparation of test sample

The nonwoven of Example 3 was cut into a square of 3cm by 3cm in side length to obtain a test sample.

### (5) Procedure of evaluation

0.2 ml of the virus suspension was dropped into the test sample, and it was kept at room temperature.

### (6) Washout of the virus

After keeping the sample for 24 hours, the virus suspension in the sample was washed out with 2ml of culture for cellular maintenance to obtain the washout solution.

### (7) Determination of viral titer of infectivity

The cells were incubated as a monolayer in wells of a microplate having 96-wells for tissue incubation using the culture for cellular proliferation. After the incubation for the monolayer, the culture for the cellular proliferation was removed form the well, and then 0.1 ml of the culture for cellular maintenance was added to each well. 0.1 ml of the washout solution or diluent thereof was seeded onto each 4 wells, and they were incubated in an incubator containing 5% of concentration of carbon dioxide gas at 37°C within 1 °C for 4 to 7 days. After the incubation, the morphological change of the cells (cytopathic effect) was observed by using an inverted phase-contrast microscope. A 50%-infection dose of the tissue incubation (TCID₅₀) was calculated by Reed-Muench Medhod, and then it was converted to viral titer of infectivity per 1 ml of the washout solution.

The result showed that after 24 hour of seeding the washout solution of the nonwoven of Example 3, Log (TCID₅₀/ml) was <2.5 (i.e. undetected) while in the case of a control of cotton fabric as standard fabric, Log (TCID₅₀/ml) was 7.0 immediately after seeding thereof, and Log (TCID₅₀/ml) was 6.0 after 24 hour of seeding thereof.

As shown in the results, in the case of the nonwoven of Example 3, the viral titer considerably decreased, and this shows that the nonwoven of Example 3 has antiviral effect against the norovirus.

### -Manufacture of Antiviral Masks-

Each of the nonwoven each obtained in Example 3 and 4 was laid on the upper surface of a polypropylene spunbonded nonwoven, and further polypropylene meltbrown nonwoven and polypropylene spunbonded nonwoven were laminated in this order, and then cut into a square of 15cm by 15cm in side length and made it into pleats of three folds. Then the laminated nonwoven was provided with a string at central portions of both lateral end portions thereof, which was used to hook the mask to the ears. Then four end portions of the laminated sheet ends were heat-sealed to obtain an antiviral mask. The mask was easy to use and gave us no feeling of suffocation when used.

### (Example 5)

### (1) Manufacture of waterproof antiviral nonwoven

On the antiviral nonwoven of Example 4, a low density polyethylene having a melting point of 103°C was laminated using an extrusion laminator. Thus a waterproof antiviral nonwoven having a thickness of 30µm was prepared.

### (2) Manufacture of medical sheets and experimental sheets

The waterproof nonwoven was used as a medical sheet and experimental sheet. Waterproof property and antiviral effects were confirmed.

### (Example 6)

### (1) Manufacture of antiviral fiber powder

At first, a test sample of viscose rayon fiber of the present invention was obtained by viscose rayon blended with vinyl acetate-maleic anhydride copolymer having fineness of 3.3dtex in a similar manner to Example 1. Then, the fiber was cut into 0.1mm length using a cutter to obtain an antiviral fiber powder.

The obtained fiber powder was immersed into 4% copper sulfate aqueous solution for 10min., washed with distilled water and then dried for 3 hours at 70°C. Thus the powder of antiviral fiber carrying copper ion was obtained. The powder of the antiviral fiber had copper content of 1% by mass as a sample.

Next, another antiviral rayon fiber was manufactured by an ionic dyeing method. Into a 10L liquid mixture of 50g/L Cationon UK aqueous solution, which is available from Ipposha Oil Industries Co., LTD. and is trade name, and of 15g/L sodium hydroxide aqueous solution, 1kg of rayon fiber (fineness: 2.2dtex, fiber length; 0.1mm) was dipped and reacted for 45min. at 85°C under a bath ratio of 1:10. The resulting cationized rayon fiber was well washed with water, and then dipped into a 10L of sodium hydroxide solution (pH=12) mixed with 1 part by mass (1% owf) of cobalt (II) phthalocyanine monosulfonic acid and cobalt (II) phthalocyanine disulfonic acid, and agitated for 30min. at 80°C to stain the rayon fiber. The resulting stained rayon fiber was well washed with water, and dried. Thereby an antiviral rayon fiber P carries cobalt (II) phthalocyanine monosulfonic acid sodium salt and with cobalt (II) phthalocyanine disulfonic acid disodium salt was obtained.

The obtained antiviral nonwoven P was subjected to a measurement of viral titer of avian influenza virus (test sample: 0.2g, reaction time: 10 min.). The viral titer of allantoic fluid B (<10^{2.75} (EID₅₀/0.2ml)) was considerably decreased when compared with that of virus solution A (10^{7.25} (EID₅₀/0.2ml)). The virus reduction rate was 99.999%.

### (2) Manufacture of nonwoven carrying antiviral fiber powder

As a fiber substrate, polypropylene spunbonded nonwoven having a mass per unit area of 40g/m² was prepared. Next, an acryl emulsion binder solution for adhering onto the fiber substrate was prepared by adding 50% by mass of the powder of the antiviral fiber of the present invention and 50% by mass of powder of antiviral rayon fiber P into the acryl emulsion binder. On the surface of the fiber substrate, the fiber powder at the rate of 3g/m² was applied using a knife coater. The binder was coated at a rate of 6g/m² in terms of solid content, and then it was cured for 3min. at 150°C. Thus nonwoven carrying antiviral fiber was obtained. Viral titer of the sample of Example 6 of the avian influenza virus is shown in Table 4.

**Table 4**

| Antiviral Fiber | Virus Strain | Amount of Fiber | Reaction Time | Viral Titer (EID₅₀/0.2ml) | | Virus Reduction (%) |
|---|---|---|---|---|---|---|
| | | | | A Solution | B Fluid | |
| Ex. 6 | H5N3 Strain | 0.2 g | 10 min. | 10 ^{6.5} | <10 ^{1.25} | >99.999 |

As shown in Table 4, viral titer of the allantoic fluid B of the sample in Example 6 considerably decreased when compared with that of virus solution A. The virus reduction rate was more than 99%. The results showed that the antiviral fiber powder-carried nonwoven had an antiviral effect against the avian influenza virus.

### (3) Manufacture of protective clothes

The nonwoven of Example 6 was cut into a predetermined shape and then the obtained nonwoven was overlapped with each other at their end portions thereof and then heat-welded, to manufacture the protective clothes. The nonwovens themselves were flexible and there was no drop of the fiber powder, being confirmed that it can be used as a protective clothes.

### (Example 7)

### (1) Manufacture of antiviral nonwovens

A test sample of viscose rayon fiber of the present invention having fineness of 7.8dtex and a fiber length of 51 mm obtained by viscose rayon blended with vinyl acetate-maleic anhydride copolymer and by spinning the mixture in a similar manner to Example 1; the antiviral rayon fiber P having fineness of 15dtex and a fiber length of 64mm carrying cobalt (II) phthalocyanine monosulfonic acid sodium salt and with cobalt (II) phthalocyanine disulfonic acid disodium salt; and polyester fiber having fineness of 30dtex and a fiber length of 64mm were used. 20% by mass of the test sample of the present invention, 40% by mass of the antiviral rayon fiber P and 40% by mass of polyester fiber were mixed, spread and made into a card web using a carding machine then a laminated web was prepared by means of cross layer. Next, acrylic binder was sprayed on both surfaces of the laminated web and dried for 1min. at 120°C, and cured for 3min. at 150°C. Thereby chemical bonded nonwoven was obtained. The acryl binder was adhered in an amount of 15% by mass in terms of solid content. The mass per unit area was 60g/m².

### (2) Manufacture of air filters

The obtained chemical bonded nonwoven was cut into a predetermined size and then fixed to a plastic unit, thus a prefilter for an air purifier was obtained.

### (Example 8)

### (1) Manufacture of antiviral fibers

A test sample of viscose rayon fiber of the present invention having 7.8dtex and a fiber length of 51 mm obtained by viscose rayon blended with vinyl acetate-maleic anhydride copolymer and by spinning the mixture in a similar manner to Example 1 was used.

The cationized rayon fiber obtained in Example 6 was well washed with water, and dipped into a 10L of sodium hydroxide solution (pH=12) mixed with 1% owf of iron (III) phthalocyanine monosulfonic acid and iron (III) phthalocyanine disulfonic acid, and agitated for 30min. at 80°C to stain the rayon fiber. The resulting stained rayon fiber was well washed with water and then dried, thus obtaining an antiviral rayon fiber P having fineness of 5.5dtex and a fiber length of 51 mm carrying iron (III) phthalocyanine monosulfonic acid sodium salt and iron (III) phthalocyanine disulfonic acid disodium salt.

The obtained antiviral fiber P was subjected to a measurement of viral titer of avian influenza virus (test sample: 0.2g, reaction time: 10 min.). The viral titer of allantoic fluid B (<10^{4.75} (EID₅₀/0.2ml)) was considerably decreased when compared with that of virus solution A (10^{6.75} (EID₅₀/0.2ml)). The virus reduction rate was 99.999%.

Further, core-sheath type composite fiber in Example 3 was prepared. 30% by mass of the test sample viscose rayon fiber of the present invention obtained by viscose rayon blended with vinyl acetate-maleic anhydride copolymer, 40% by mass of the antiviral rayon fiber P and 30% by mass of core-sheath type composite fiber were mixed, spread and made into a card web using a carding machine then a laminated web was prepared by means of a cross layer. And then the laminated web was heat-treated at 140°C using hot air-through processing machine to melt the sheath portion of the core-sheath type composite fiber, thus obtaining a thermobonded nonwoven. The mass per unit area was 60g/m².

Viral titer of the sample of Example 8 of the avian influenza virus is shown in Table 5.

**Table 5**

| Antiviral Fiber | Virus Strain | Amount of Fiber | Reaction Time | Viral Titer (EID₅₀/0.2ml) | | Virus Reduction (%) |
|---|---|---|---|---|---|---|
| | | | | A Solution | B Fluid | |
| Ex. 8 | H5N3 Strain | 0.2 g | 10 min. | 10^{6.5} | <10^{1.5} | >99.999 |

As shown in Table 5, viral titer of allantoic fluid B in which the test sample of Example 8 was used, a considerable decrease when compared with that of the virus liquid A was observed. The virus reduction rate was more than 99%. These results showed that the antiviral nonwoven of Example 8 had the antiviral effect on the avian influenza virus.

### (Example 9)

### (1) Manufacture of antiviral textiles

A test sample of viscose rayon fiber of the present invention having fineness of 1.4dtex and a fiber length of 38mm obtained by viscose rayon blended with vinyl acetate-maleic anhydride copolymer and by spinning the mixture in a similar manner to Example 1; and regenerated polyester fiber having fineness of 1.45dtex and a fiber length of 35mm, which is available from Teijin Fibers Limited and is Ecopet: trade name, were used. 50% by mass of the sample of the present invention and 50% by mass of the regenerated polyester fiber were mixed to manufacture a single yarn (twist coefficient:4.3-4.5 and yarn number:14). A textile (warp:89 / inch, weft:51 / inch, twill: 3/1) was manufactured using an air jet loom.

Then the textile was treated with the metallic ion by using a jigger dyeing machine. 0.5%owf of copper sulfate aqueous solution towards the textile by mass was used for the jigger dyeing machine, and the textile was dipped, squeezed by nip rolls, then washed with water in a washing bath, and then dried at 120°C, thereby obtaining a test sample of the antiviral textile.

### 2. Manufacture of working clothes

The textile of Example 9 was cut into a predetermined shape and the end portions of the cut textile were overlapped with each other and sewn to make working clothes. The clothes were easy to wear.

### ---Manufacture of antiviral fiber---

### (Example 10)

Into a viscose solution of cellulose (cellulose concentration was 9%), water-soluble salts of vinyl acetate-maleic anhydride copolymer was added and dissolved so that the content of the copolymer became 20 parts by mass for 100 parts by mass of cellulose as a solid content. The mixed solution was extruded using a nozzle made of platinum into a strongly acidic spinning bath comprising 130g/l of sulfuric acid, 10g/l of zinc sulfate and 250g/l of sodium sulfate. After conventional desulfurizing, refining and bleaching processes, a test sample of viscose rayon fiber containing vinyl acetate-maleic acid anhydride copolymer of the present invention was obtained. Its fineness was 7.8dtex, and fiber length was 76mm.

The obtained rayon fiber was immersed into 5% zinc sulfate (ZnSO₄·7H₂O) aqueous solution at 60°C for 20min., washed with distilled water and then dried at 70°C for 3 hours to obtain a test sample of the antiviral fiber. The antiviral fiber as a sample had zinc content of 1% by mass.

### (Example 11)

The viscose rayon fiber obtained in a similar manner to Example 10 was immersed into 5% nickel chloride (NiCl₂·6H₂O) aqueous solution at 60°C for 20min., washed with distilled water and then dried at 70°C for 3 hours to obtain a test sample of the antiviral fiber. The antiviral fiber as a sample had nickel content of 1% by mass.

The effectiveness of the antiviral fiber obtained in Examples 10 or 11 against the avian influenza virus (H5N3) was evaluated. The results are shown in Table 6.

**Table 6**

| Antiviral Fiber | Virus Strain | Amount of Fiber | Reaction Time | Viral Titer (EID₅₀/0.2ml) | | Virus Reduction (%) |
|---|---|---|---|---|---|---|
| | | | | A Solution | B Fluid | |
| Ex. 10 | H5N3 Strain | 0.2 g | 10min. | 10^{6.75} | 10^{3.25} | 99.96 |
| Ex. 11 | H5N3 Strain | 0.2 g | 10 min. | 10^{6.75} | 10^{3.50} | 99.94 |

As shown in Table 6, viral titer of the allantoic fluid B in which each antiviral fiber was used as shown in Examples 10 (as the rayon fiber containing the vinyl acetate-maleic acid copolymer carrying zinc ion) or Example 11 (as the rayon fiber containing the vinyl acetate-maleic acid copolymer carrying nickel ion) considerably decreased when compared with virus solution A. The virus reduction rate showed 99% or more. These results showed that each antiviral fiber of Examples 10 and 11 had antiviral effect against the avian influenza virus.

### (Example 12)

### 1. Manufacture of antiviral nonwovens

### (1) Manufacture of antiviral fiber

An antiviral fiber with fineness of 1.7dtex and a fiber length of 38mm was prepared in a similar manner to Example 2.

### (2) Manufacture of another antiviral fiber P

An another antiviral fiber P with fineness of 1.7dtex and a fiber length of 38mm was prepared in a similar manner to Example 8.

### (3) Manufacture of nonwoven

30% by mass of the antiviral fiber; 20% by mass of the antiviral fiber P; and 50% by mass of a polyester type thermal adhesive composite fiber, which is available from Unitika LTD. and is Melty: trade name, having fineness of 2.2dtex and a fiber length of 51 mm; were used. These fibers were mixed and the mixture was formed into a fiber web using a parallel carding machine and then subjected to hydro-entangling treatment, thus obtaining an antiviral nonwoven having the mass per unit area of 50g/m².

Viral titer of avian influenza virus (H5N3 strain) of the antiviral nonwoven was measured. Viral titer of allantoic fluid B (10^{0.75} (EID₅₀/0.2ml)) dramatically decreased when compared with that of virus solution A (10^{6.75} (EID₅₆/0.2ml)). The virus reduction rate was 99.999%.

### 1. Manufacture of antiviral masks

The obtained antiviral nonwoven was put on a top surface of a polypropylene spunbonded nonwoven. Further, a meltbrown polypropylene nonwoven and a spunbonded polypropylene nonwoven were laminated in this order from bottom to top. The laminated sheet was cut into a square of 15 cm by 15cm in side length, and then folded into 3 pleats. Then the laminated nonwoven was provided with a string at both lateral end portions thereof, which was used to hook the mask to the ears. Then four end portions of the laminated sheet ends were heat-sealed to obtain an antiviral mask.

This mask comprised a protective nonwoven (spunbonded nonwoven)/ultra filtration nonwoven (meltbrown nonwoven)/ antiviral nonwoven/protective nonwoven (spunbonded nonwoven). These nonwovens were laminated in this order from outside to inside (i.e. mouth-side). The mask was easy to use and gave us no feeling of suffocation when used.

### (Example 13)

### 1. Manufacture of antiviral nonwovens

30% by mass of a viscose rayon fiber of the present invention having fineness of 7.8dtex and a fiber length of 76mm obtained in Example 7 in which the viscose rayon was blended with vinylacetate-maleic anhydride copolymer; 30% by mass of antiviral fiber having fineness of 5.6dtex and a fiber length of 76mm obtained in a similar manner to Example 6; and 40% by mass of core-sheath type composite fiber, which is available from Daiwabo polytec Co. LTD. and is NBF(H) :trade name, having fineness of 2.2dtex and a fiber length of 51mm in which core component was made of polypropylene and sheath component was made of high-density polyethylene; were used.
These fibers were mixed and then the mixture was spread using a parallel carding machine to obtain a card web. Next, the card web was heat-treated at 140°C using a heat roll processing machine comprising a pair of emboss/flat roll to melt the sheath component and to partly pressure (the rate of emboss area is about 18%) the core-sheath type composite fiber to manufacture two kinds of thermobonded nonwoven (antiviral nonwovens). The mass per unit area of the obtained nonwoven was 15g/m² and 30g/m² respectively.

The antiviral nonwoven was subjected to a measurement of viral titer of avian influenza virus ( H5N3 strain). The viral titer of allantoic fluid B (<10^{1.50} (EID₅₀/0.2ml)) was considerably decreased when compared with that of virus liquid A (10^{6.75} (EID₅₀/0.2ml)). The virus reduction rate was 99.999%.

### 2. Manufacture of air filters

A chemical bond nonwoven which was a mixture of polyester fiber and rayon fiber was used as a fiber substrate. On the upper surface of the fiber substrate, hot melt adhesive was sprayed and the obtained antiviral nonwoven was laminated and integrated. Then the hot melt adhesive was sprayed on the antiviral nonwoven, and an electret nonwoven (ultra filter layer) having a mass per unit area of about 150g/m² was laminated and integrated by the hot melt adhesive. The obtained sheet was pleats-folded using a pleat processing machine and fixed to a plastic unit, thus obtaining a filter for an air purifier.

### Industrial Applicability

The antiviral substance of the present invention can be used as a raw material for antiviral fiber of the present invention. In addition, antiviral fiber structure of the present invention containing at least partly the antiviral fiber of the present invention can be formed into yarn, woven/knitted fabric, webs, nonwoven, paper, nets etc. and be used for various textile industry. The antiviral fiber structures inactivate viruses, being able to be utilized for medical use.

The antiviral fiber products, which contain at least partly the antiviral fiber, can be formed into and used for clothes, futon/Japanese-style bedding, curtains, wallpaper, carpets, mats, sheets, filters, masks, wipers, towels, protective clothes, guard nets, bags for culled chicken, poultry house supplies, medical sheets and so on.

## Claims

1. An antiviral substance comprising;
a polymer containing a maleic acid component as a monomer unit in a polymer chain thereof.

2. The antiviral substance according to claim 1, wherein the polymer is a copolymer selected from the group consisting of an olefine-maleic acid copolymer, a styrene-maleic acid copolymer, a vinyl ester-maleic acid copolymer, a vinyl acetate-maleic acid copolymer and a vinyl chloride-maleic acid copolymer.

3. The antiviral substance according to claim 1, wherein an ion of a metal selected from the group consisting of copper, silver, zinc and nickel is carried with the polymer.

4. The antiviral substance according to claim 1, wherein the polymer containing the maleic acid component is a vinyl acetate-maleic acid copolymer carrying a copper ion.

5. The antiviral substance according to claim 2, wherein the polymer is a blend of cellulose and at least one of the copolymer having the maleic acid component.

6. The antiviral substance according to claim 1, which is effective against an avian influenza virus.

7. The antiviral substance according to claim 6, wherein the avian influenza virus is at least one selected from the group consisting of A/whistling swan/Shimane/499/83 (H5N3) strain and A/ Turkey/Wisconsin/1/66 (H9N2)) strain.

8. The antiviral substance according to claim 1, which is effective against a human influenza virus.

9. The antiviral substance according to claim 1, which is effective against a swine influenza virus.

10. The antiviral substance according to claim 1, which is effective against a norovirus.

11. An antiviral fiber comprising;
an antiviral substance comprising a polymer containing a maleic acid component as a monomer unit in a polymer chain thereof.

12. An antiviral fiber structure comprising at least partly the antiviral fiber according to claim 11.

13. An antiviral fiber product comprising at least partly the antiviral fiber according to claim 11 and being formed into clothes, bedclothes, bedding, curtains, wallpapers, carpets, mats, sheets, filters, masks, wipers, towels, protective clothes, guard nets, culled chicken bags, poultry house supplies or medical sheets.
